# EUROPEAN PATENT APPLICATION

(11) **EP 3 029 790 A1**
(43) Date of publication of application: **08.06.2016**
(21) Application number: 14004124.5
(22) Date of filing: 05.12.2014
(51) Int. Cl.: H02B 13/035

(54) **Medium voltage switchgear arrangement**

(71) Applicant: ABB Technology AG, 8050 Zürich (CH)
(72) Inventor: Gentsch, Dietmar, 40882 Ratingen (DE)
(74) Representative: Schmidt, Karl Michael

(57) **Abstract**

The invention relates to a Medium voltage switchgear arrangement with a vacuum circuit breaker with embedded or assembled pole part in an insulating material, and a three-position-switch, located in a closed compartment, according to the preamble of claim, and a method of operating same, according to the preamble of claim 16.

In order to implement all aforesaid components, vacuum circuit breaker and three-position-switch in a compact and safe construction,
that the three-position-switch and the vacuum circuit breaker are mounted on the common support arrangement, that the three- position-switch is arranged in a closed capsule, and that the drive axis of the vacuum circuit breaker is perpendicular to the drive axis of the three-position switch.

## Description

The invention relates to a medium voltage switchgear arrangement with a vacuum circuit breaker with embedded or assembled pole part in an insulating material, that means for example an insulating resin, and a three-position-switch, and a method of operating the same, according to the preamble of claims 1 and 16.

Switches like that, with the features of the preamble of claim 1 are for example disclosed in japan patent application JP 2013165596.

It is the object of the invention, to implement all aforesaid components, vacuum circuit breaker and three-position-switch in a compact and functionally safe construction.

Considering that, the invention is, that the three-position-switch and the vacuum circuit breaker are mounted on the common support arrangement, that the three- position-switch is arranged in a closed capsule, and that the drive axis of the the vacuum circuit breaker is perpendicular to the drive axis of the three-position switch.
This feature combination causes serveral advantages concerning to each single feature as well as the feature combination.

First is, that a very compact unit with vacuum circuit breaker as well as with three position switch is finally resulted.
The use of the closed capsule for the three position switch results in a possible commonly housing in one resin body.
The feature of the defined perpendicular arrangement of the drive axis of the vacuum circuit breaker to the drive axis of the three position switch results in a constructive embodiment, in which the drives are then separated as far as possible, in order to have a high isolation path between the different possible electrical potential between them.

Consequentely, an advantageous embodiment is, that the vacuum circuit breaker and the three-position-switch are commonly arrangend at least partly in the same insulating resin.

In a further advantageous embodiment, the three position switch is arrangend at one connection terminal of the vacuum circuit breaker.

In a further advantageous embodiment, the switching elements of the three-position-switch are arranged in a closed and separated volume, surrounded by the aforesaid insulating material, which is filled with fluid insulating medium.

In a further advantageous embodiment, the fluid insulating medium is insulating oil.

In a further advantageous alternative embodiment, the fluid insulating medium is fluorketone, or derivates of fluorketone

In a further advantageous embodiment, the vacuum circuit breaker is mechanically connected with and driven by a first drive, and the three-position-switch is mechanically connected to a second drive, and that the first drive and the second drive are logically coupled.

In a further advantageous embodiment, the three position switch is a tubelike construction with an axially sliding movable contact element which slides and contacts via surrounding contact ring elements as fixed contacts, through which the moving contact element can be driven.
In a further advantageous embodiment, the Switchgear is applied for three-phase network, for each of the three phases each.

In a further advantageous embodiment, the contacts or the current carrying parts of the switchgear arrangement ar thermally connected with heat pipes, in order to be cooled.

Furthermore, an advantageous embodiment is, that the inner surface of the capsule, inside which the three-position-switch is arranged, is cylindrical, and that the inner surface of the cylindrical capsule is provided with at least one ringrip, which are orientated perpendicular around the central centerline of the cylindrical capsule, in order to prevent a closely conductive line or path of erodated metal particle after some switching procedures. By that a leakage current, or in best case a shortcut is prevented.

In an advantageous embodiment, the aforesaid capsule is filled with an insulating liquid.

In an alternative also advantageous embodiment, the capsule is filled with fluorketone, or with fluorketone-derivates, or with fluorketonebased material.

In a further advantageous alternative, instead of a vacuum interrupter a switch in SF6-Gas environment is used. That means an open switch without vacuum chamber is used and the housing of the switchgear is filled with SF6 Gas. SF6 means sulfurhexafluoride.

In a further advantageous embodiment, the inside volume of the capsule is connected with an expanding volume, in order to let the fluidum inside the capsule expand in case of heating up, and that at least this expanding volume is connected to cooling means.

According to a Method for operating a medium voltage switchgear arrangement, the invention is, that a commonly mounted three-position-switch and the vacuum circuit breaker mounted on the common support arrangement, wherein the vacuum circuit breaker is mechanically coupled with and driven by a first drive, and the three-position-switch is mechanically coupled with and driven by a second drive, and the first drive and the second drive are logically coupled, so that the different switching positions of the three position switch can be latched, by physical or by logical electronical latching means, against the switching positions of the vacuum circuit breaker.
An embodiment of the invention is shown in the drawing.
Figure 1: A side view cut of switchgear
Figure 2: A cut of the three-position-switch in a capsule

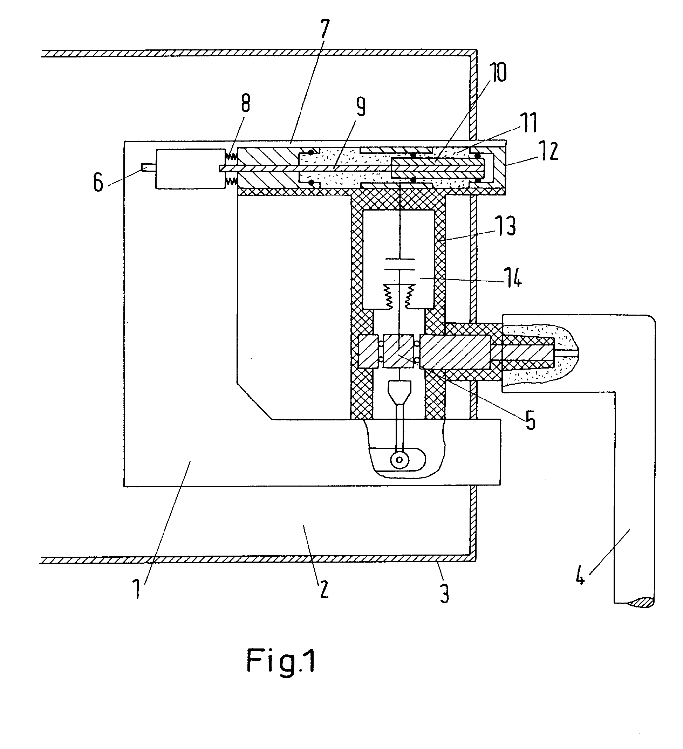

Figure 1 shows a side view cut of the switchgear 1, into a switchgear housing 3. The switching parts of the switchgear are a vacuum interrupter 14 and a three-position-switch 7. In this embodiment of the switch gear, the three position switch is arranged in a capsule, filled with a liquid isolating media. The three position switch 7 is mounted on top of the vacuum interrupter 14, and/or at the fixed contact side of the vacuum interrupter 14. The relative arrangement of both switches, that means the three position switch 7 and the vacuum interrupter 14 is chosen a s such, that the long axis of the vacuum interrupter 14 is perpendicular to the drive axis -long axis- of the three position switch 7. This has a fundamental technical advantage. I such oriented relative arrangement, the drive of the vacuum interrupter 14 and the drive of the three position switch have the longest possible distance, in order to get these two drives electrically separated according to their individual electrical potential, they can have in several relative switching positions.
In such construction, it is then possible to get the three position switch, as well as the vacuum interrupter embedded in one common insulation housing, or a common embedding cover.
The vacuum interrupter has a sliding contract 5 at the moving contact side.
So the drive of the vacuum interrupter 14 can be placed with maximum distance to the drive of the three position switch 7.

The filling of the three position switch 7 can be insulating oil, or flourketone, or flourketone derivates.

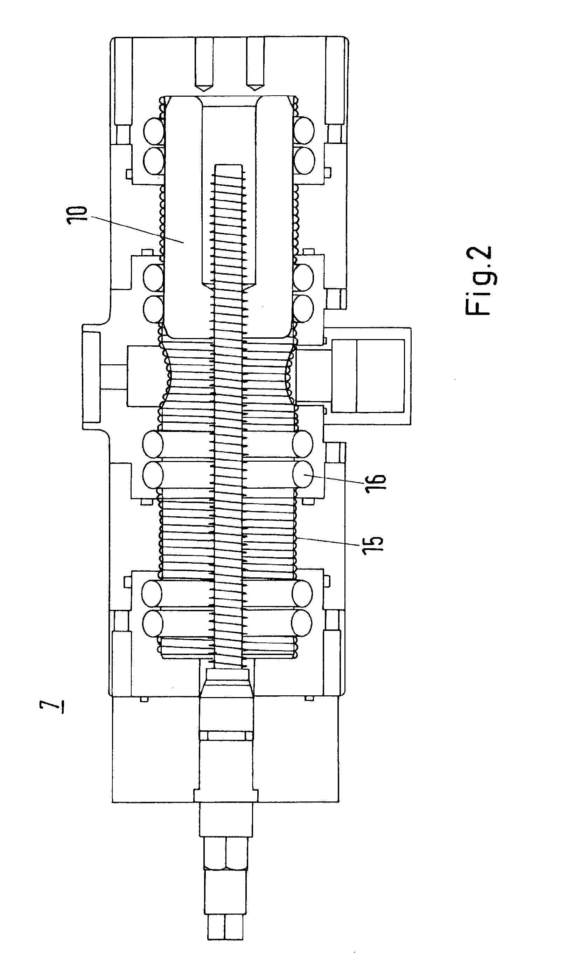

Figur 2 shows the inner construction of the three position switch 7. The pistion 10 is moved by the spindle 9, so that the piston, made of electrical conductive material is the moved switching element between the contact rings 16. Important is, that the inner surface of the capsule of the three position switch is provided with a ringrips 15. In the case, that metallic erodated particles, which are caused by the switching movement as such, are falling towards the bottom side of the inner surface along the long axis, the ringrips care for a wavelike structured bottomline, so that the erodated metallic particles, can not result into a conductive line parallel to the aforesaid long axis.
So maximum electrical safety is given by that.

### Position numbering:

1 switchgear
2 internal installation room of the switchgear housing
3 housing
4 cable connection
5 sliding contact piston
6 pin or optical view
7 three position switch
8 compensation bellow
9 spindle
10 piston of the three position switch
11 liquid isolation media
12 connection to solid busbar
13 embedding, embedded pole part
14 vacuum interrupter
15 ringrips
16 contacts

## Claims

1. Medium voltage switchgear arrangement with a vacuum circuit breaker with embedded or assembled pole part in an insulating material, and a three-position-switch, located in a closed compartment,
**characterized in**
**that** the three-position-switch and the vacuum circuit breaker are mounted on the common support arrangement, that the three- position-switch is arranged in a closed capsule, and that the drive axis of the vacuum circuit breaker is perpendicular to the drive axis of the three-position switch.

2. Medium voltage switchgear arrangement according to claim 1,
**characterized in**
**that** the vacuum circuit breaker and the three-position-switch are commonly arrangend at least partly in the same insulating resin.

3. Medium voltage switchgear arrangement according to claim 2,
**characterized in**
**that** the three position switch is arrangend at one connection terminal of the vacuum circuit breaker.

4. Medium voltage switchgear arrangement according to claim 3,
**characterized in**
**that** the switching elements of the three-position-switch are arranged in a closed and separated volume, surrounded by the aforesaid insulting material, which is filled with an insulating fluidum.

5. Medium voltage switchgear arrangement according to claim 4,
**characterized in**
**that** the insulating fluidum is insulating oil.

6. Medium voltage switchgear arrangement according to claim 4,
**characterized in**
**that** the insulating fluidum is fluorketone or derivates of fluorketone.

7. Medium voltage switchgear arrangement according to one of the aforesaid claims,
**characterized in**
**that** the vacuum circuit breaker is mechanically connected with and driven by a first drive, and the three-position-switch is mechanically connected to a second drive, and that the first drive and the second drive are logically coupled.

8. Medium voltage switchgear arrangement according to one of the aforesaid claims,
**characterized in**
**that** the three position switch is a tubelike construction with an axially sliding movable contact element which slides and contacts via surrounding contact ring elements as fixed contacts, through which the moving contact element can be driven.

9. Medium voltage switchgear arrangement according to one of the aforesaid claims,
**characterized in**
**that** the Switchgear is applied for three-phase network, for each of the three phases each.

10. Medium voltage switchgear arrangement according to one of the aforesaid claims,
**characterized in**
**that** the contacts or the current carrying parts of the switchgear arrangement are thermally connected with heat pipes, in order to be cooled.

11. Medium voltage switchgear arrangement according to one of the aforesaid claims,
**characterized in**
**that** the inner surface of the capsule, inside which the three-position-switch is arranged, is cylindrical, and that the inner surface of the cylindrical capsule is provided with at least one ringrip, which is or are orientated perpendicular around the central centerline of the cylindrical capsule, in order to prevent a closely conductive line of erodated metal particle after some switching procedures.

12. Medium voltage switchgear arrangement according to one of the aforesaid claims,
**characterized in**
**that** the capsule is filled with an insulating liquid.

13. Medium voltage switchgear arrangement according to one of the aforesaid claims 1 to 11,
**characterized in**
**that** the capsule is filled with fluorketone, or with fluorketone-derivates, or with fluorketonebased material.

14. Medium voltage switchgear arrangement according to one of the aforesaid claims 1 to 13,
**characterized in**
**that** instead of a vacuum interrupter a switch in SF6-Gas environment is used.

15. Medium voltage switchgear arrangement according to claim13,
**characterized in**
**that** the inside volume of the capsule is connected with an expanding volume, in order to let the fluidum inside the capsule expand in case of heating up, and that at least this expanding volume is connected to cooling means.

16. Method for operating a medium voltage switchgear arrangement as claimed in at least one the aforesaid claims,
**characterized in**
**that** a commonly mounted three-position-switch and the vacuum circuit breaker mounted on the common support arrangement,
wherein the vacuum circuit breaker is mechanically coupled with and driven by a first drive, and the three-position-switch is mechanically coupled with and driven by a second drive, and the first drive and the second drive are logically coupled, so that the different switching positions of the three position switch can be latched, by physical or by logical electronical latching means, against the switching positions of the vacuum circuit breaker.
